Europäisches Patentamt

European Patent Office

Office européen des brevets

(11) Publication number: **0 208 203 B1**

# EUROPEAN PATENT SPECIFICATION

(45) Date of publication of patent specification: **09.01.91**

(51) Int. Cl.⁵: **B 65 C 11/02, B 41 J 3/36**

(21) Application number: **86108663.5**

(22) Date of filing: **25.06.86**

(54) **Unit type thermal label printer.**

(30) Priority: **26.06.85 JP 137859/85**

(43) Date of publication of application:
**14.01.87 Bulletin 87/03**

(45) Publication of the grant of the patent:
**09.01.91 Bulletin 91/02**

(84) Designated Contracting States:
**DE FR GB**

(56) References cited:
**EP-A- 657**
**DE-A-2 512 471**
**DE-A-3 208 005**
**FR-A-2 551 570**
**US-A-3 837 966**
**US-A-4 497 682**

(73) Proprietor: **Kabushiki Kaisha Sato**
**15-5, 1-chome, Shibuya**
**Shibuya-ku Tokyo (JP)**

(72) Inventor: **Sato, Yo**
**21-23, 3-chome Kamikitazawa**
**Setagaya-ku Tokyo (JP)**

(74) Representative: **Patentanwälte Grünecker,**
**Kinkeldey, Stockmair & Partner**
**Maximilianstrasse 58**
**D-8000 München 22 (DE)**

**Description**

The invention relates to a thermal label printer according to the preamble part of the single main claim.

Such a thermal label printer is known from EP-A-0 000 657. This reference discloses a labelling machine, the functional portions of which are included in a single unit.

Although, in general a thermal label printer can be of a smaller size or dimension compared with other types of printers, such as wire-type printers or hammer-type printers, it still suffers from its relatively high weight if it is used as a portable device.

Moreover, the generic printer is not capable of offering various types of utilising or operating modes in accordance with the conditions of operations, such as table-type, portable-type or lightweight. Finally, there may be problems with a known thermal label printer in case of defects or if service and maintenance work is required since the printing machine or feeding means is difficult to check or to replace in case of breakage.

It is therefore an object underlying the present invention to provide a thermal label printer according to the preamble part of the main claim which can be dynamically adapted for use at different places and times and which can easily be maintained.

The solution of this object is achieved by the features of claim 1.

Thus, the thermal label printer according to the present invention is divided into several units which can be freely connected electrically and mechanically so that by appropriately combining these units the thermal label printer can be dynamically adapted for use in different places and times and in different ways.

In the following a preferred embodiment of the thermal label printer according to the present invention will be described with reference to the drawings.

Figure 1 is a perspective view of the unit type thermal label printer according to this invention, showing the units and accessory parts disconnected;

Figure 2 is a sectional side view of the same embodiment showing its internal structure when assembled;

Figure 3 is a perspective view of a segment of the label strip;

Figure 4 is a view illustrating the printer connected to a microcomputer;

Figure 5 is a perspective view of the data terminal unit connected to the label printer unit;

Figure 6 is a perspective view with the label printer unit, data terminal unit, applicator unit, and handle unit connected together; and

Figure 7 is a perspective view of the data terminal unit disconnected from the label printer unit.

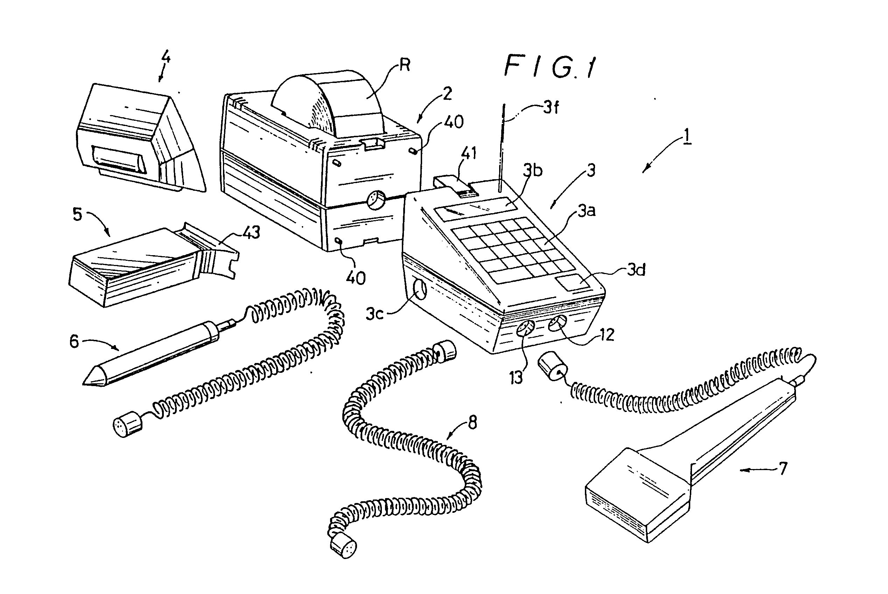

With reference to Figure 1, the thermal label printer 1 according to this invention comprises a main printer unit 2, a data terminal unit 3, an applicator unit 4, and a handle unit 5. Provided as accessories are a pen scanner and touch scanner for reading data, and a cable 8 for connecting the label printer unit 2 to the data terminal unit 3. Data input to the data terminal unit 3 is performed by scanning optically readable data with the pen scanner or by touching the data with the touch scanner.

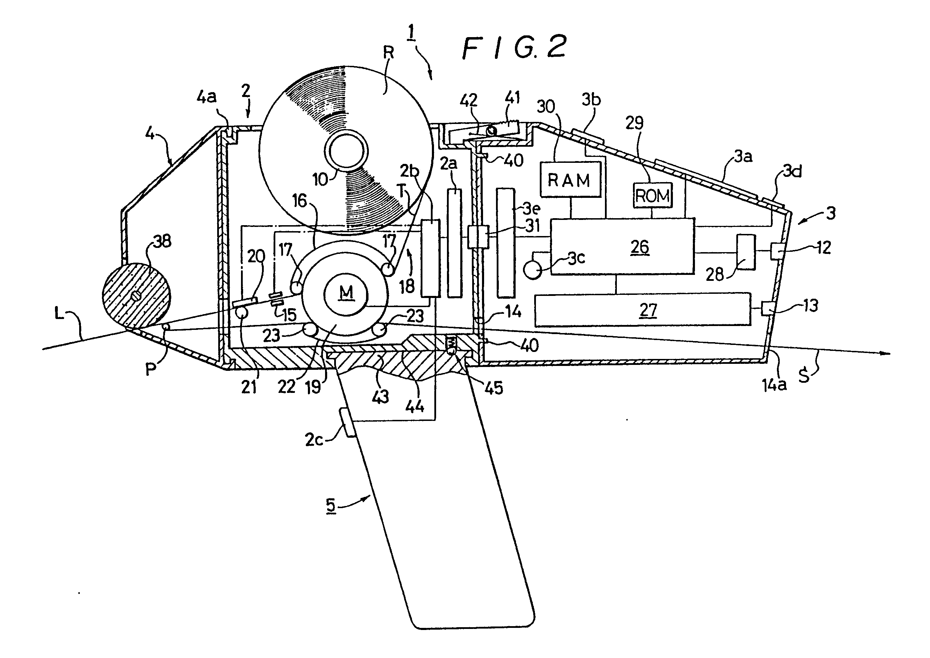

The internal structure of the printer 1 with the printer unit 2, the data terminal unit 3, the applicator unit 4, and the handle unit 5 in the assembled state will now be described, with reference to Figure 2.

As shown in Figure 1, a thermal label strip T passes from a thermal label roll R on a support member 10 into a label strip passage 18 via guide rollers 17 of an upper press member 16.

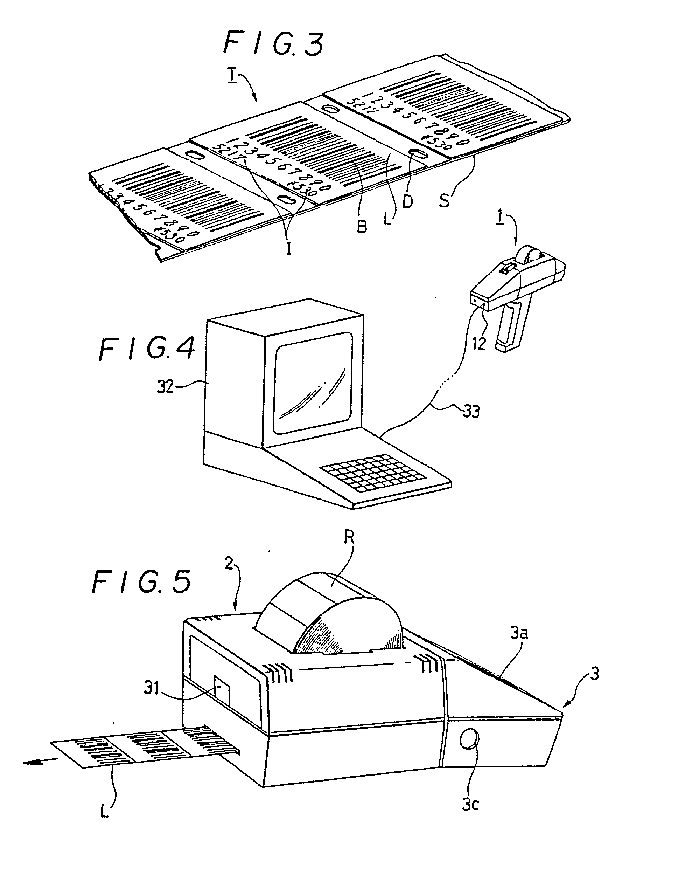

As shown in Figure 3, the label strip T consists of a backing sheet S coated with a separating agent and having a plurality of labels L, each of which is coated with an adhesive, detachably adhered continuously along its length. On the labels L of the thermal label strip T is printed information I such as a bar code B representing a merchandise code or manufacturing code, a department code or a price. The backing sheet S is provided with holes D which are for position detection purposes. The holes D can also be utilized for conveyance purposes by engagement with the conveyor roller 19 (Figure 2).

Reverting to Figure 2, the thermal label strip T passes via the conveyor roller 19 and a position sensor 15 to a thermal print head 20 and a platen 21, is redirected at the platen 21 portion by a bending pin P where the labels L are peeled off, so that just the backing strip S is directed back to engagement with the conveyor roller 19, guided by guide rollers 23 of a lower press member 22, and the backing sheet S then feeds out from the data terminal unit 3 via a discharge outlet 14a.

The conveyor roller 19 is driven by the stepped rotation action of a stepping motor M so as to move the thermal label strip T in the required direction for printing and conveyance.

The data terminal unit 3 houses a control circuit 26, which is connected to a battery 27, an interface 28 for data input from and output to external devices, a ROM program memory 29 for communication and control programs, a RAM data memory 30, and a keyboard 3a which includes a power switch. The display 3b, socket 3c for the scanners 6 and 7, print switch 3d, and the printer unit 2 are also connected by means of an interface 3e to the control circuit 26 and are thereby controlled by the control circuit 26.

The interface 3e is connected to the interface 2a of the printer unit 2 via the socket 31 for linking the printer unit 2 and the data terminal unit 3. The sensor 15, thermal print head 20, stepping motor M and print switch 2c are connected to an auxiliary control circuit 2b which is connected to the interface 2a.

The control circuit 26 controls data input/output operations and the general functions, and the auxiliary control circuit 2b controls the printing and label conveyance for the printing. The battery 27 is a rechargeable type and can be connected via the socket 13 to an external battery charger (not shown).

Figure 4 shows the thermal label printer 1 connected to a microcomputer 32 to allow data I/O operations therebetween. Data can be transferred to the microcomputer 32 via the socket 12 and a cable 33. An acoustic coupler can be used to link the printer 1 to a host computer via a telephone by means of a wired or wireless link (not illustrated). Data input/output operations can be carried out by radio with the provision on the data terminal unit 3 of an antenna 3f, indicated by a phantom line in Figure 1.

The applicator unit 4 is provided with the said bending pin P and an application roller 38, and can be mechanically attached to and detached from the printer unit 2 by means of an engaging projection 4a. The printer unit 2 is provided with a pair of engaging pins 40 on the side facing the data terminal unit 3. An engaging member 41 is pivotably attached to the upper front edge of the data terminal unit 3, and by means of a spring 42 can be engaged with and disengaged from an engaging portion provided on the printer unit 2. The top of the handle unit 5 is provided with a dovetail portion 43 which can be engaged with and disengaged from a dovetail groove 44 provided on the lower part of the printer unit 2, and can by locked into place by a lock 45. The mechanical connections of the various units are not restricted to those shown in the drawings; components can be adapted as desired to form a configuration that is in line with requirements.

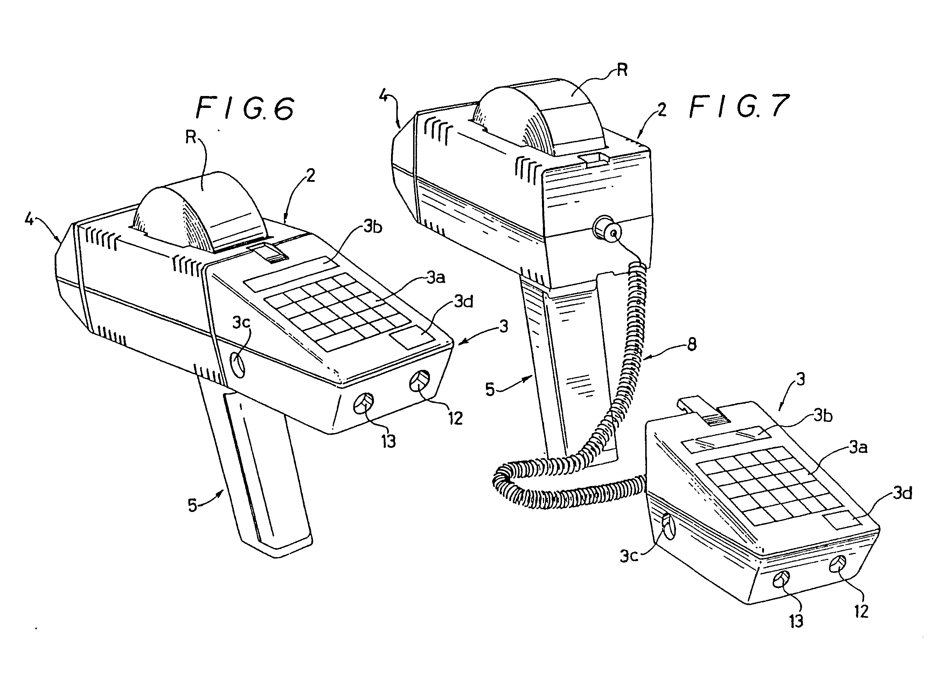

Figures 5 to 7 show some of the formats that can be used by combining the units 2, 3, 4, and 5, the scanners 6 and 7, and the cable 8. Figure 5 shows an example of the data terminal unit 3 connected to the label printer unit 2 for desk-top type applications. In this case, the thermal label strip T only engages with the conveyor roller 19 at the top portion thereof, so the labels L feed out of the front of the printer unit 2 together with the backing sheet S, so the labels L can be peeled by hand and applied to an object.

With the type of application shown in Figures 6 and 7, labels are printed by operating the switch 2c, while in the example shown in Figure 5, switch 3d is used to print the labels.

Thus, with the printer 1, as the various units can be combined together, data input/output and printing of labels for different applications can be done, such as by, in the case of printing labels of different sizes, readying printer units corresponding to the different sizes of labels to be printed, and the like, giving the printer 1 a wide range of applicability. In addition, there are also service and maintenance benefits, as in the case of a breakdown, only the unit that has broken down needs to be replaced.

Some of the potential applications for the present thermal printer include labelling and reordering of merchandise and inventory control at retail outlets, management of business data files, printing of blood data cards and sample tube labels at blood banks, printing of bar code labels for patient charts and medical certificates at hospitals and clinics, process, parts and inventory control in factories, in the freight business the printing of confirmation labels at parcel reception/dispatch points, and the management of customer data, and data and printing of labels relating to outside suppliers at department stores and supermarkets.

The thermal label printer according to this invention is not limited to data input/output functions; by providing great flexibility in the printing of labels, it is applicable in a great many fields, and offers better economic efficiency.

**Claim**

A thermal label printer (1) comprising:
a path (18) for the passage of a label strip (T) consisting of thermosensitive labels (L) detachably attached to a backing sheet (S);
a supporting member (10) for supporting a roll (R) of the label strip (T);
a label position detecting means (15);
a label strip transport means (19, M);
a thermal label printing means (20, 21) for thermal character printing on the thermal labels (L);
a data memory means (30);
a data input means (3a) for inputting data manually;
a program memory means (29);
an input/output means (12, 33) for data communication with external devices (32);
a control means (26) for controlling the aforementioned means;
a label peeling member (P);
a label application member (38); and
a handle (5) having a switch (2c) for effecting a label printing operation characterized in
that said path (18), said supporting member (10), said position detecting means (15), said transport means (19, M) and said printing means (20, 21) are combined to a separate label printer unit (2);
that said data memory means (30), said data input means (3a), said program memory means (29), and said input/output means (12, 33) are combined to a separate data terminal unit (3) being provided with input means (3c) for a data reading scanner (6 or 7),
that said control means comprises a control circuit (26) which is a component of the separate data terminal unit (3) and which is connected with an additional print switch (3d) of the data terminal unit (3), said control means furthermore comprising an auxiliary control circuit (2b) which is a component of the label printer unit (2) and which is connected with said switch (2c) of said handle unit (5) and said control circuit (26);
that said label printer unit (2) and said data terminal unit (3) are detachably attachable by electrical and mechanical means (31 and 40 to 42);

that said label peeling member (p) and said label application member (38) are combined to a separate applicator unit (4) which is detachably attachable by mechanical means (4a) to said label printer unit (2); and

that said handle takes the form of a handle unit (5) which is detachably attachable by electrical and mechanical means (43, 44) to said label printer unit (2).

**Patentanspruch**

Thermodrucker (1) für Etiketten, umfassend:

einen Pfad (18) für den Durchtritt eines Etikettenbandes (T), bestehend aus wärmeempfindlichen Etiketten (L), die lösbar auf einem Trägerblatt (S) befestigt sind;

ein Halterungsglied (10) zum Haltern einer Rolle (R) des Etikettenbandes (T);

eine Einrichtung (15) zum Erkennen der Etikettenposition;

eine Transporteinrichtung (19, M) für das Etikettenband;

eine Thermoetiketten-Bedruckungseinrichtung (20, 21) zum thermischen Drucken von Zeichen auf die Thermoetiketten (L);

eine Datenspeichereinrichtung (30);

eine Dateneingabeeinrichtung (3a) zum Eingeben von Daten per Hand;

eine Programmspeichereinrichtung (29);

eine Input/Outputeinrichtung (12, 33) für die Datenkommunikation mit externen Vorrichtungen (32);

eine Steuereinrichtung (26) zum Steuern der vorstehenden Einrichtungen;

ein Etiketten-Abziehglied (P);

ein Etiketten-Applikationsglied (38); und einen Handgriff (5) mit einem Schalter (2c) zum Herbeiführen eines Etikettenbedruckungsvorganges, dadurch gekennzeichnet,

daß der Pfad (18), das Halterungsglied (10), die Positionserkennungseinrichtung (15), die Transporteinrichtung (19, M) und die Bedruckungseinrichtung (20, 21) in einer gesonderten Etikettenbedruckungseinheit (2) kombiniert sind;

daß die Datenspeichereinrichtung (30) die Dateneingabeeinrichtung (3a), die Programmspeichereinrichtung (29) und die Input/Outputeinrichtung (12, 33) in einer gesonderten Datenterminaleinheit (3) kombiniert sind, welche mit Eingabeeinrichtungen (3c) für einen Datenlesescanner (6 oder 7) versehen ist;

daß die Steuereinrichtung einen Steuerschaltkreis (26) enthält, welcher eine Komponente der gesonderten Datenterminaleinheit (3) darstellt und welcher mit einem zusätzlichen Druckschalter (3d) der Datenterminaleinheit (3) verbunden ist, wobei die Steuereinrichtung ferner einen Hilfssteuerschaltkreis (2b) aufweist, welcher eine Komponente der Etikettenbedruckungseinheit (2) darstellt und welcher mit dem Schalter (2c) des Handgriffs (5) sowie dem Steuerschaltkreis (26) verbunden ist;

daß die Etikettenbedruckungseinheit (2) und die Datenterminaleinheit (3) lösbar durch elektrische und mechanische Einrichtungen (31) und (40—42) miteinander verbindbar sind;

daß das Etikettenabziehglied (P) und das Etikettenapplikationsglied (38) in einer gesonderten Applikatoreinheit (4) kombiniert sind, welche lösbar mittels mechanischer Einrichtungen (4a) mit der Etikettenbedruckungseinheit (2) verbindbar ist; und

daß der Handgriff die Gestalt einer Handgriffeinheit (5) aufweist, welche lösbar mittels elektrischer und mechanischer Einrichtungen (43, 44) mit der Etikettenbedruckungseinheit (2) verbindbar ist.

**Revendication**

Une imprimante thermique (1) pour étiquettes comprenant:

un passage (18) pour le cheminement d'une bande d'étiquettes (T) constituée d'étiquettes thermosensibles (L) fixées de façon détachable sur une feuille support (S);

un élément de support (10) pour supporter un rouleau (R) de la bande d'étiquettes (T);

des moyens (15) de détection de la position des étiquettes.

des moyens (19, M) de transport de la bande d'étiquettes;

des moyens (20, 21) d'impression thermique d'étiquette,

pour l'impression thermique de caractères sur les étiquettes thermiques;

des moyens (30) de mémorisation des données;

des moyens (3a) d'entrée de données pour entrer des données manuellement;

des moyens (29) de mémorisation des programmes;

des moyens (12, 33) d'entrée/sortie pour la communication de données avec des dispositifs externes (32);

des moyens de commande (26) pour commander les moyens mentionnés précédemment.

un élément (P) de détachement d'étiquette;

un élément (38) d'application d'étiquette; et une poignée (5) dotée d'un commutateur (2c) pour effectuer une opération d'impression d'étiquette, caractérisée par le fait que:

ledit passage (18), ledit élément de support (10), lesdits moyens (15) de détection de la position, lesdits moyens de transport (19, M) et lesdits moyens d'impression (20, 21) sont combinés en une unité (2) d'impression d'étiquettes séparée;

lesdits moyens (30) de mémorisation de données, lesdits moyens (3a) d'entrée de données, lesdits moyens (29) de mémorisation des programmes, et lesdits moyens (12, 33) d'entrée/sortie, sont combinés en une unité terminale de données séparée (3) dotée de moyens d'entrée (3c) pour un scanner (6 ou 7) de lecture de données;

lesdits moyens de commande comprennent un circuit de commande (26) qui est un composant de l'unité terminale de données séparée (3), et est relié à un commutateur (3d) supplémentaire d'im-

pression de l-unité terminale de données (3), lesdits moyens de commande comprenant en outre un circuit de commande auxilaire (2b), que est un composant de l'unité (2) d'impression d'étiquettes, et est relié audit commutateur (2c) de ladite unité à poignée (5) et audit circuit de commande (26);

ladite unité (2) d'impression d'étiquettes et ladite unité terminale de données (3) sont aptes à être fixées de façon détachable par des moyens électriques et mécaniques (31 et 40 à 42);

ledit élément (P) de détachement d'étiquette et ledit élément (38) d'application d'étiquette sont combinés en une unité d'application (4) séparée, qui est apte à être fixée de façon détachable, par des moyens mécaniques (4a), à ladite unité (2) d'impression d'étiquettes; et

ladite poignée prend la forme d'une unité à poignée (5) qui est apte à être fixée de façon détachable par des moyens électriques et mécaniques (43, 44) à ladite unité (2) d'impression d'étiquettes.

EP 0 208 203 B1

*F I G.1*

FIG.2

2

# F I G. 3

# F I G. 4

# F I G. 5

FIG.7

FIG.6